# EUROPÄISCHE PATENTSCHRIFT

(11) **EP 2 723 630 B1**
(45) Veröffentlichungstag und Bekanntmachung des Hinweises auf die Patenterteilung: **06.04.2016**
(21) Anmeldenummer: 12735218.5
(22) Anmeldetag: 13.06.2012
(51) Int. Cl.: F16D 67/02, B62M 6/55

(54) **ANTRIEBSEINRICHTUNG FÜR EIN ELEKTRORAD**
DRIVE DEVICE FOR AN ELECTRIC BICYCLE
DISPOSITIF D'ENTRAÎNEMENT POUR UNE BICYCLETTE ÉLECTRIQUE

(30) Priorität: 21.06.2011 DE 102011077903
(43) Veröffentlichungstag der Anmeldung: 30.04.2014
(73) Patentinhaber: Brose Fahrzeugteile GmbH & Co. Kommanditgesellschaft, Coburg, Max-Brose-Straße 1 96450 Coburg (DE)
(72) Erfinder: GETTA, Udo, 10409 Berlin (DE); NOACK, Ullrich, 10405 Berlin (DE); FLEISCHMANN, Karl-Heinz, 16348 Marienwerder (DE)
(74) Vertreter: Maikowski & Ninnemann
(86) Internationale Anmeldenummer: PCT/EP2012/061184
(87) Internationale Veröffentlichungsnummer: WO 2012/175383

(56) Entgegenhaltungen:
- EP-A1- 2 216 242
- EP-A2- 0 765 804

## Beschreibung

Die Erfindung betrifft eine Antriebseinrichtung für ein Elektrorad, insbesondere für ein elektromotorisch und mit Muskelkraft hybrid betriebenes Pedelec, gemäß dem Oberbegriff des Anspruchs 1.

Unter einem Elektrorad versteht man entweder ein Elektrofahrrad (E-Bike oder eBike), bei dem es sich um ein Fahrrad mit zusätzlichem oder eingebautem Elektromotor handelt, dessen Versorgung mit elektrischer Energie über einen Akkumulator erfolgt, oder um ein Pedelec, bei dem ein Elektromotor ohne Treten der Pedale mit Ausnahme eines Einsatzes als Schiebe- oder Anfahrhilfe bis zu einer Geschwindigkeit von 6 km/h keine Leistung abgibt. Für das Einschalten oder die Steuerung des Elektromotors eines Pedelecs kann
- die Kraft oder das Drehmoment über das Signal eines Kraftsensors an den Pedalen, der Tretkurbel, der Kette oder am Rad,
- die Tretgeschwindigkeit über das Signal eines Drehzahlsensors,
- die Geschwindigkeit des Fahrzeugs am Rad, insbesondere um den Elektromotor ab einer Geschwindigkeit von 25 km/h auszuschalten,
- die Beschleunigung
gemessen und die Messung mechanisch oder elektronisch weiterverarbeitet werden, um den Elektromotor ein- und auszuschalten oder anhand einer Steuerfunktion stufenlos zu regeln.

Die in den Elektromotor eingespeiste Leistung wird aufgrund der Sensordaten in Abhängigkeit von einem gewählten Unterstützungsgrad von der Motorsteuerung berechnet, so dass der Elektromotor automatisch einen bestimmten Prozentsatz der vom Fahrer erbrachten Leistung dazugibt. Der Unterstützungsgrad bzw. Prozentsatz der vom Elektromotor dazu zu gebenden Leistung kann in mehreren Stufen eingestellt oder vom Hersteller oder einem Monteur fest vorgegeben werden.

Aus der EP 2 216 242 A1 ist eine Antriebseinrichtung mit einem Elektroantrieb für ein mit Muskelkraft betriebenes Zweirad bekannt, die eine Einbauhülse, die in einer Büchse eines Rahmenteils des Zweirades verankert ist, eine Kurbelwelle, an deren Enden mit Pedalen verbundene Kurbeln zur Muskelkraftbetätigung vorgesehen sind und eine koaxial zur Kurbelwelle gelagerten Antriebshülse, die in der Einbauhülse gelagert ist, aufweist. Die Antriebshülse enthält an einem Ende eine Adapterscheibe, die mit einem Kettenrad verbunden ist. Zwischen der Kurbelwelle und der Antriebshülse ist als drehrichtungsabhängige Kupplung ein Tretkurbelfreilauf angeordnet, während die Antriebshülse über einen Antriebsfreilauf und ein Getriebe mit dem Rotor eines Elektromotors verbunden ist. Zur Ermittlung des Drehmoments und der Drehzahl der Kurbelwelle sind Drehmoment- und Drehzahlsensoren vorgesehen, die Signale an eine elektronische Steuerung abgeben, die die vom Fahrer aufgebrachte Leistung ermittelt und den Elektromotor zur Unterstützung des Fahrers ansteuert.

Aufgabe der vorliegenden Erfindung ist es, eine Antriebseinrichtung der eingangs genannten Art anzugeben, die bei geringem Bauvolumen und optimaler Erfassung der durch Muskelkraft und elektromotorischer Kraft aufgebrachten Antriebskraft eine Vielzahl von Funktionen ermöglicht.

Diese Aufgabe wird erfindungsgemäß durch die Merkmale des Anspruchs 1 gelöst.

Die erfindungsgemäße Lösung stellt eine Antriebseinrichtung für ein Elektrorad bereit, die bei geringem Bauvolumen, d.h. bei geringen äußeren Abmessungen und optimaler Erfassung der durch Muskelkraft und elektromotorischer Kraft aufgebrachten Antriebskraft eine Vielzahl von Funktionen ermöglicht. Die erfindungsgemäße Antriebseinrichtung ermöglicht einen Pedelec-Betrieb, das heißt eine Fahrradfunktion mit elektromotorischer Unterstützung, einen rein elektromotorischen Antrieb, beispielsweise als Schiebe- oder Anfahrhilfe, einen reinen Fahrradbetrieb, beispielsweise bei Ausfall der Stromversorgung des Elektromotors, sowie in allen Betriebsarten den Einsatz einer Freilauffunktion oder einer Rücktrittfunktion. Die kompakte Bauweise erlaubt die Verwendung gebräuchlicher Kettenradsätze am Tretlager und durch einfache Änderung der Steuerfunktion der Steuereinrichtung kann von einem Pedelec-Betrieb auf einen E-Bike-Betrieb umgeschaltet werden.

Durch die Integration drehrichtungsabhängiger Kupplungen in die Antriebseinrichtung können die verschiedenen Funktionen mit geringem Aufwand und äußerst platzsparend realisiert werden. Durch die koaxiale Anordnung der Tretkurbelwelle und der fest mit dem Kettenrad verbundenen Hohlwelle werden die vom Fahrer mit Muskelkraft erzeugte Leistung und die vom Elektromotor abgegebene Leistung für den Vortrieb des Elektrorades aufsummiert, so dass durch einen auf der Hohlwelle angeordneten Drehmomentsensor in einfacher Weise die Summe des durch die Tretkurbeln erzeugten Drehmomentes bestimmt werden kann.

Durch die Koppelbarkeit der Hohlwelle mit der Tretkurbelwelle in beide Drehrichtungen der Tretkurbelwelle kann eine Einrichtung zur Betätigung einer Rücktrittbremse vorgesehen werden. Diese ist nach einem weiteren Merkmal der Erfindung zwischen der Tretkurbelwelle und der Hohlwelle angeordnet. Bei einer entgegen gesetzten Drehrichtung zur Drehrichtung für Vorwärtsfahrt der Tretkurbelwelle läuft die erste drehrichtungsabhängige Kupplung frei. Eine weitere drehrichtungsabhängige schaltende Kupplung überträgt das Moment von der Tretkurbelwelle auf die Hohlwelle und ermöglicht so die Rücktrittfunktion.

Neben einer Freilauffunktion, bei der bei alleinigem elektromotorischen Antrieb der Hohlwelle und damit des Kettenrades und Kettengetriebes des Elektrorades kein Drehmoment auf die Tretkurbelwelle und damit auf die Pedale bzw. im reinen Fahrradbetrieb kein Drehmoment von der Tretkurbelwelle zum elektromotorischen Antrieb übertragen wird, ermöglicht die erfindungsgemäße Antriebseinrichtung somit auch eine Rücktrittbremsfunktion ohne Veränderung bzw. Eingriff in die Freilauffunktion der Antriebseinrichtung. Daher kann die Antriebseinrichtung auch problemlos mit der Einrichtung zur Betätigung einer Rücktrittbremse nachgerüstet werden.

Um zu verhindern, dass der elektromotorische Antrieb bei einer Betätigung der Rücktrittbremse ein Drehmoment entgegen der Betätigungsdrehrichtung der Rücktrittbremse erzeugt und dieses zur Tretkurbelwelle übertragen wird, wird der Elektromotor von einer Steuerelektronik angesteuert, die mit Sensoren zur Erfassung der Drehzahl, Drehrichtung und des Drehmoments der Tretkurbelwelle verbunden ist und den Elektromotor bei Betätigung der Rücktrittbremse, d.h. bei einer der Vorwärtsfahrtrichtung des Elektrorades entgegen gesetzten Drehrichtung und/oder entgegen gerichteten Drehmoments der Tretkurbelwelle abschaltet.

Die Einrichtung zur Betätigung einer Rücktrittbremse besteht vorzugsweise aus einem Klemmrollenfreilauf mit einem drehfest mit der Tretkurbelwelle verbundenen ersten Freilaufstern, einem Schaltgehäuse mit in Nuten angeordneten Klemmrollen und einem mit dem Schaltgehäuse verbundenen und koaxial freibeweglich auf der Tretkurbelwelle angeordneten Schaltelement eines mit seiner Außenfläche drehfest mit dem Gehäuse verbundenen Betätigungsfreilaufs.

Der Klemmrollenfreilauf bewirkt, dass die fest mit dem Kettenrad verbundene Hohlwelle entgegen der Drehrichtung der Antriebseinrichtung für eine Vorwärtsfahrt des Elektrorades gedreht werden kann, wobei die diese Drehrichtung im Freilaufbetrieb verhindernde erste drehrichtungsabhängig geschaltete Kupplung für die Zeit der Betätigung der Rücktrittbremse überbrückt werden muss, um ein Drehmoment in zur Vorwärtsfahrt entgegen gesetzter Richtung von der Tretkurbelwelle auf die Hohlwelle übertragen zu können. Bei Betätigung der Rücktrittbremse wird der elektromotorische Antrieb durch die zweite drehrichtungsabhängig geschaltete Kupplung derart mit der Hohlwelle verbunden, dass in dieser Drehrichtung ein Drehmoment übertragen werden kann. Gleichzeitig schaltet die Steuerelektronik bei der Richtungsumkehr zur Betätigung der Rücktrittbremse den Elektromotor ab, so dass sichergestellt ist, dass bei Betätigung der Rücktrittbremsfunktion nicht motorisch in den Betrieb eingegriffen wird. Dies erfolgt mittels der den Elektromotor ansteuernden Steuerelektronik im Zusammenhang mit der sensorischen Erfassung der Drehzahl und Drehrichtung der Tretkurbelwelle unabhängig von der Drehzahl der mit dem Kettenrad verbundenen Hohlwelle.

Alternativ zu einer drehfesten Verbindung des koaxial und frei beweglich zur Tretkurbelwelle angeordneten Schaltgehäuses mit dem Schaltelement des Betätigungsfreilaufes kann der Freilaufstern des mit seinem Außendurchmesser fest mit dem Gehäuse verbundenen Betätigungsfreilaufes drehelastisch mit dem Schaltgehäuse verbunden werden.

Vorzugsweise besteht die drehelastische Verbindung zwischen dem Schaltgehäuse und dem Freilaufstern des Betätigungsfreilaufes aus einer zylindrischen, auf die Tretkurbelwelle aufgesteckten Dreh- oder Spiralfeder, die mit einem Ende mit dem Schaltgehäuse und mit dem anderen Ende mit dem Freilaufstern des Betätigungsfreilaufes verbunden ist.

Eine drehelastische Verbindung des Freilaufsterns des Betätigungsfreilaufes mit dem Schaltgehäuse weist den Vorteil auf, dass das vom Schaltgehäuse über die Klemmrollen erzeugte Abstützmoment progressiv drehelastisch auf den Freilaufstern des Betätigungsfreilaufs übertragen wird. Dadurch ist eine Winkelbeweglichkeit der Tretkurbelwelle in Rückwärts-Drehrichtung der Antriebseinrichtung bei gesperrtem Betätigungsfreilauf möglich und gleichzeitig kann innerhalb des möglichen Drehwinkels, der durch die Blockierung der Dreh- oder Spiralfeder gegeben ist, das mit der Hohlwelle fest verbundene Kettenrad gegen die Vorwärtsdrehrichtung der Antriebseinrichtung gedreht werden, so dass ein eventuell vorhandenes Spiel der Bauelemente der Antriebseinrichtung bis zur Betätigung der Rücktrittbremse ausgeglichen wird.

Vorzugsweise ist die Motorwelle des Elektromotors über ein Getriebe, insbesondere ein mehrstufiges Untersetzungsgetriebe, mit der Hohlwelle verbunden.

Durch die Verbindung des Elektromotors mit der mit dem Kettenrad des Kettengetriebes des Elektrorades fest verbundenen Hohlwelle über ein Getriebe ist eine Anpassung des Drehzahlbereichs des elektromotorischen Antriebs an den Drehzahlbereich der mit Muskelkraft betätigten Tretkurbelwelle und der Einsatz eines mit hoher Drehzahl betreibbaren Elektromotors möglich, der bei entsprechender Leistungsabgabe eine geringe Baugröße aufweist, so dass eine Antriebseinrichtung mit minimalen äußeren Abmessungen in den Rahmen des Elektrorades integriert werden kann.

Vorzugsweise besteht das mehrstufige Untersetzungsgetriebe zwischen dem Elektromotor und der Motorwelle aus einem zweistufigen Stirnradgetriebe mit einem mit der Motorwelle verbundenen Ritzel, einem mit dem Ritzel kämmenden Stirnrad großen Durchmessers eines Doppelzahnrades und einem mit einem Stirnrad kleinen Durchmessers des Doppelzahnrades kämmenden Abtriebsstirnrad, das koaxial mit der Hohlwelle verbunden ist.

Für die unterschiedlichen Betriebsarten der Antriebseinrichtung (reiner Fahrradbetrieb mit nur durch Muskelkraft erzeugter Antriebskraft ohne elektromotorische Unterstützung, Hybridbetrieb mit elektromotorischer Unterstützung der durch Muskelkraft erzeugten Antriebskraft, rein elektromotorischer Fahrbetrieb ohne Muskelkraftbetätigung und in diesen Betriebsarten eine Freilauffunktion oder eine Betätigung einer Rücktrittbremse) ist eine den Elektromotor ansteuernde Steuerelektronik vorgesehen, die eingangsseitig mit Sensorsignalen beaufschlagt ist. Die von Sensoren abgegebenen Sensorsignale können wegen der rein mechanischen Funktion der drehrichtungsabhängig geschalteten Kupplungen und des Klemmrollenfreilaufs zur Betätigung der Rücktrittbremse auf die Drehzahl und das Drehmoment der Tretkurbelwelle sowie die Bewegungsgeschwindigkeit des Elektrorades beschränkt werden. Die Steuerelektronik verarbeitet dabei die eingangsseitigen Sensorsignale zur Einhaltung einer Maximalgeschwindigkeit von 6 km/h bei einem ausschließlich elektromotorischen Antrieb als Schiebe- oder Anfahrhilfe für ein Pedelec bzw. für eine Maximalgeschwindigkeit von 25 km/h für den gesetzlich erlaubten elektromotorisch unterstützten Betrieb eines Pedelecs oder E-Bikes.

Die für die Steuerung des elektromotorischen Antriebs durch die Steuerelektronik erforderliche Erfassung des durch Muskelkraft erzeugten Drehmoments der Tretkurbelwelle ist jedoch problematisch. Die Einleitung eines Drehmoments in die Tretkurbelwelle ergibt sich aus der Kraft, die auf die beiden an den Enden der Tretkurbelwelle angeordneten Tretkurbeln auf die Tretkurbelwelle ausgeübt wird. Bei einer Erfassung des Drehmoments auf der Basis der Verformung der Tretkurbelwelle ist der Verlauf des zu erfassenden Verdrehwinkels dem durch beide Tretkurbeln als Summe beider Einzelmomente erzeugten Drehmoments nicht proportional, da der Verlauf der Verformung der Tretkurbelwelle durch die Stelle bestimmt wird, an der das Drehmoment für den muskelbetätigten Antrieb von der Tretkurbelwelle an die mit dem Kettenrad und damit mit dem Kettengetriebe des Elektrorades verbundene Hohlwelle weitergeleitet wird. Dabei ist die eine Tretkurbel in nur geringem Abstand zum antreibenden Kettenrad mit der Tretkurbelwelle verbunden, während die andere Tretkurbel am gegenüberliegenden Ende mit der Tretkurbelwelle verbunden ist.

Das über die Tretkurbeln erzeugte Drehmoment steht jedoch im Gleichgewicht mit dem Drehmoment zum Antrieb am Kettenrad, das asymmetrisch zwischen den Tretkurbeln angebracht ist, so dass die jeweilige Tretkurbel nur eine Verformung der Tretkurbelwelle auf der jeweiligen Seite erzeugt, auf der es mit der Tretkurbelwelle verbunden ist. Für eine genaue Erfassung der Summe des von den Tretkurbeln eingeleiteten Drehmomentes ist daher eine separate Messung des von jeder Tretkurbel erzeugten Drehmoments mit anschließender Summenbildung beider Drehmomente erforderlich.

Anstelle einer separaten Erfassung der von den Tretkurbeln in die Tretkurbelwelle eingeleiteten Drehmomente wird der Verdrehwinkel der Hohlwelle zwischen der ersten drehrichtungsabhängig geschalteten Kupplung und dem Kettenrad gemessen, da der Verdrehwinkel der Tretkurbelwelle zwischen der über die erste drehrichtungsabhängig geschaltete Kupplung in die Hohlwelle eingeleiteten Drehmoments bis zu dem mit der Hohlwelle fest verbundenen Kettenrad proportional zu dem aus beiden Tretkurbeln erzeugten Drehmomentes ist.

Wird durch den elektromotorischen Antrieb ein weiteres Drehmoment in die Hohlwelle eingeleitet, so wird der Verdrehwinkel der Hohlwelle zwischen der ersten drehrichtungsabhängig geschalteten Kupplung und der zweiten drehrichtungsabhängig geschalteten Kupplung erfasst, da der Verdrehwinkel zwischen der ersten drehrichtungsabhängig geschalteten Kupplung, über die das Drehmoment der Tretkurbelwelle eingeleitet wird, und der zweiten drehrichtungsabhängig geschalteten Kupplung, an der das Drehmoment des elektromotorischen Antriebs in die Hohlwelle eingeleitet wird, proportional dem Drehmoment aus der Tretkurbelwelle ist und daher im Bereich zwischen der ersten und zweiten drehrichtungsabhängig geschalteten Kupplung gemessen werden kann.

Damit ermöglicht die erfindungsgemäße Lösung eine einfache und leicht zugängliche Erfassung des durch Muskelkraft aufgebrachten Tretmoments auf der mit dem Kettengetriebe des Elektrorades unmittelbar gekoppelten Hohlwelle.

Da bei einem Einsatz der erfindungsgemäßen Antriebseinrichtung in einem Pedelec ein alleiniger elektromotorischer Antrieb nur bis zu einer Höchstgeschwindigkeit von 6 km/h und eine Maximalgeschwindigkeit mit elektromotorischer Unterstützung bis 25 km/h gesetzlich zulässig ist, können wegen der durch die mechanisch wirksamen drehrichtungsabhängig geschalteten Kupplungen bewirkten Entkopplung des elektromotorischen Antriebs von dem durch Muskelkraft betätigten Antrieb die gesetzlichen Beschränkungen ausschließlich durch die Steuerelektronik bewirkt und eingehalten werden.

Dem entsprechend kann die Steuerelektronik den Elektromotor bei Überschreitung einer vorgegebenen Geschwindigkeit des Elektrorades ohne Einleitung eines Drehmoments über die Tretkurbelwelle abschalten, so dass - infolge der Erfassung der Bewegungsgeschwindigkeit des Elektrorades und der Drehzahl bzw. des Drehmoments der Tretkurbelwelle - sowohl die für eine Anfahrhilfe zugelassene als auch die Maximalgeschwindigkeit des Elektrorades eingehalten werden.

Um eine zu hohe Belastung des Elektromotors bzw. des den Elektromotor speisenden Akkumulators zur verhindern, kann die Abschaltung des Elektromotors durch die Steuerelektronik auch bei Überschreitung einer vorgebbaren Zeitspanne der ununterbrochenen Betätigung des Elektromotors erfolgen.

Beim elektromotorisch unterstützten Betrieb wird die Drehzahl und das Drehmoment der Tretkurbelwelle erfasst und an die Steuerelektronik abgegeben, so dass durch geregeltes Einschalten des Elektromotors beispielsweise mittels Pulsweitenmodulation (PWM) oder durch eine entsprechende Spannungsregelung vom elektromotorischen Antrieb drehzahlkonform ein erforderliches zusätzliches Drehmoment über die zweite drehrichtungsabhängig geschaltete Kupplung auf die Hohlwelle übertragen und die Vortriebsleistung des Elektrorades auf die vom Fahrer mittels Muskelkraft aufgebrachte Kraft und die elektromotorisch erzeugte Kraft aufgeteilt wird.

Wird die Drehzahl des die Hohlwelle antreibenden elektromotorischen Antriebs größer als die von der Tretkurbelwelle an die Hohlwelle abgegebene Drehzahl, so wird die Tretkurbelwelle über die zwischen der Tretkurbelwelle und der Hohlwelle angeordnete drehrichtungsabhängig geschalteten Kupplung getrennt, so dass kein Drehmoment auf die Tretkurbelwelle, das zum Antrieb der Pedale führen wird, übertragen wird. Dabei wird die Drehzahl des Elektromotors bis zum geforderten Drehmoment nachgeregelt.

Eine vom Elektromotor abgegebene geringere Drehzahl als die von der Tretkurbelwelle abgegebene Drehzahl erzeugt kein Drehmoment, weil über die zweite drehrichtungsabhängig geschaltete Kupplung der elektromotorische Antrieb von der Hohlwelle getrennt wird.

Nach einem weiteren Merkmal der Erfindung ist über ein Bedienteil des Elektrorades der Grad der Leistungsaufteilung zwischen dem über die Tretkurbelwelle eingeleiteten Drehmoment und dem vom Elektromotor abgegebenen Drehmoment einstellbar.

Diese Aufteilung der vom Fahrer mit Muskelkraft aufgebrachten und der vom Elektromotor bereitgestellten Leistung kann in Stufen oder stufenlos erfolgen, wobei die Leistungsaufteilung wegen der mechanischen Entkopplung der durch Muskelkraft betätigten Tretkurbelwelle vom elektromotorischen Antrieb unter Berücksichtigung der gesetzlichen Vorgaben durch die für unterschiedliche gesetzliche Vorgaben vorzugsweise programmierbare Steuerelektronik bewirkt wird.

In bevorzugter Ausführung besteht die erste und zweite drehrichtungsabhängig geschaltete Kupplung aus einem Klemmkörperfreilauf mit einem Innen- und Außenring und zwischen dem Innen- und Außenring angeordneten Klemmkörpern, wobei der Innen- oder Außenring in der den Innen- mit den Außenring koppelnden Drehrichtung des Innenoder Außenringes Schrägflächen bzw. Klemmrampen aufweist.

Vorzugsweise besteht das Elektrorad aus einem E-Bike oder einem Pedelec, wobei die Steuerelektronik ohne Rückwirkung des elektromotorischen Antriebs auf die Tretkurbelwelle einstellbar ist.

Wegen des kompakten Aufbaus der erfindungsgemäßen Antriebseinrichtung und der dadurch möglichen Anordnung der Antriebseinrichtung zwischen den Tretkurbeln eines E-Bikes oder Pedelecs ist die Hohlwelle direkt mit einem Kettenblattflansch verbunden, der wahlweise mit dem Kettenblatt oder mit Mehrfach-Kettenblättern in Verbindung mit einer Kettenblattschaltung verbindbar ist.

Anhand von Ausführungsbeispielen, die unter Bezugnahme auf die in der Zeichnung dargestellten Figuren beschrieben werden, sollen die Erfindung und die sich aus der Erfindung ergebenden verschiedenen Ausführungsformen näher erläutert werden. Die Figuren der Zeichnung zeigen:
- Fig.1: eine teilweise geschnittene, perspektivische Darstellung einer Antriebseinrichtung für ein Pedelec mit Freilauffunktion;
- Fig. 2: eine perspektivische Schnittdarstellung der Antriebseinrichtung gemäß Fig. 1;
- Fig. 3: einen schematischen Längsschnitt durch die Antriebs- und Kupplungselemente zur Erläuterung der Freilauffunktionen;
- Fig. 4: einen Querschnitt durch die schematische Darstellung gemäß Fig. 3 zur Erläuterung der Freilauffunktion im Pedelec-Betrieb;
- Fig. 5: einen Querschnitt durch die schematische Darstellung gemäß Fig. 3 zur Erläuterung der Freilauffunktion im Elektromotorbetrieb;
- Fig. 6: eine Explosionsdarstellung einer Antriebseinrichtung mit einer Einrichtung zur Betätigung einer Rücktrittbremse;
- Fig. 7: eine Explosionsdarstellung der Kupplungselemente und Freiläufe der Einrichtung zur Betätigung der Rücktrittbremse;
- Fig. 8: einen schematischen Längsschnitt durch die Antriebs- und Kupplungselemente der Antriebseinrichtung und Einrichtung zur Betätigung der Rücktrittbremse;
- Fig. 9: eine Explosionsdarstellung der Antriebseinrichtung mit Rücktrittfunktion und drehelastischer Verbindung eines Teils der die Rücktrittfunktion ermöglichenden Bauteile und
- Fig. 10: eine teilweise geschnittene perspektivische Darstellung der Antriebseinrichtung mit Rücktrittfunktion gemäß Fig. 9.

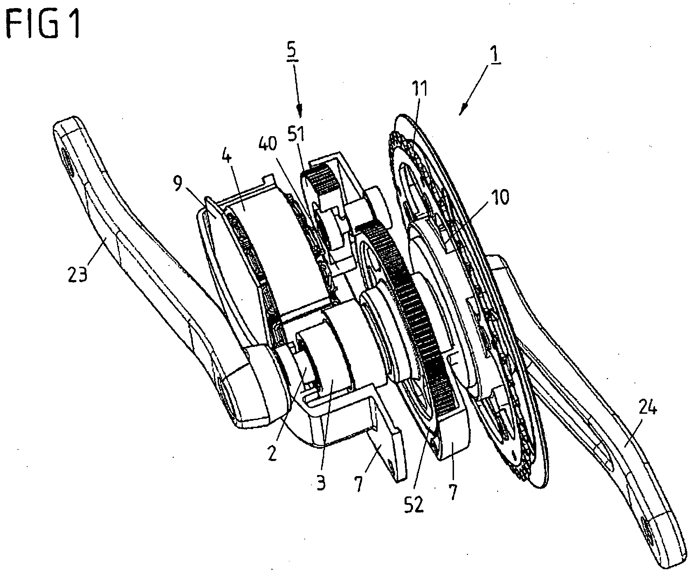

Fig. 1 zeigt in perspektivischer Darstellung eine Antriebseinrichtung 1 mit Freilauffunktion bei aufgeschnittenem Gehäuse 7, das mit dem Rahmen eines Pedelecs oder E-Bikes verbunden bzw. in den Rahmen integriert wird. Durch den der Fig. 1 zu entnehmenden kompakten Aufbau der Antriebseinrichtung kann die Antriebseinrichtung problemlos zwischen den Pedalen des Elektrorades angeordnet werden, so dass die Antriebskraft über ein Kettengetriebe mit einem Kettenrad 11 und eine Kette auf ein Kettenritzel zum Antrieb des Hinterrades übertragen wird.

Die Antriebseinrichtung 1 umfasst eine Tretkurbelwelle 2, deren Enden mit Tretkurbeln 23, 24 verbunden sind, an deren Enden wiederum nicht näher dargestellte Pedale vorgesehen sind, auf die im Betrieb eine Muskelkraft ausgeübt wird, die über den Hebelarm der Tretkurbeln 23, 24 ein durch Muskelkraft bewirktes Drehmoment auf die Tretkurbelwelle 2 überträgt.

Die Tretkurbelwelle 2 ist über eine als Klemmkörperfreilauf ausgebildete erste drehrichtungsabhängig geschaltete Kupplung mit einer koaxial zur Tretkurbelwelle 2 angeordneten und drehbar im Gehäuse 7 gelagerten Hohlwelle 3 verbunden, an deren einem Ende ein Kettenradflansch 10 angeordnet ist, der mit einem Kettenrad 11 verbunden ist, das die Antriebskraft bzw. das Antriebs-Drehmoment über die Kette auf das mit dem Hinterrad des Elektrorades verbundene Kettenritzel überträgt.

Eine elektromotorische Kraft wird von einem Elektromotor 4 erzeugt, der mittels einer Steuerelektronik 9, die auf einer mit dem Elektromotor 4 verbundenen Platine angeordnet ist, angesteuert und mit elektrischer Energie aus einem nicht näher dargestellten Akkumulator versorgt wird, der in den Rahmen des Elektrorades integriert wird oder beispielsweise mit dem Gepäckträger des Elektrorades verbunden wird.

Das vom Elektromotor 4 über seine Motorwelle 40 abgegeben Drehmoment wird über ein Getriebe 5 und eine als Klemmkörperfreilauf ausgebildete zweite drehrichtungsabhängig geschaltete Kupplung auf die Hohlwelle 3 übertragen.

Das zwischen der Motorwelle 40 und der zweiten drehrichtungsabhängig geschalteten Kupplung angeordnete Getriebe 5 ist als zweistufiges Stirnradgetriebe ausgebildet, das ein Doppelzahnrad 51 enthält, dessen größeres Zahnrad mit einem mit der Motorwelle 40 verbundenen Ritzel kämmt und dessen kleineres Zahnrad mit einem mit der zweiten Kupplung verbundenen Abtriebszahnrad 52 kämmt.

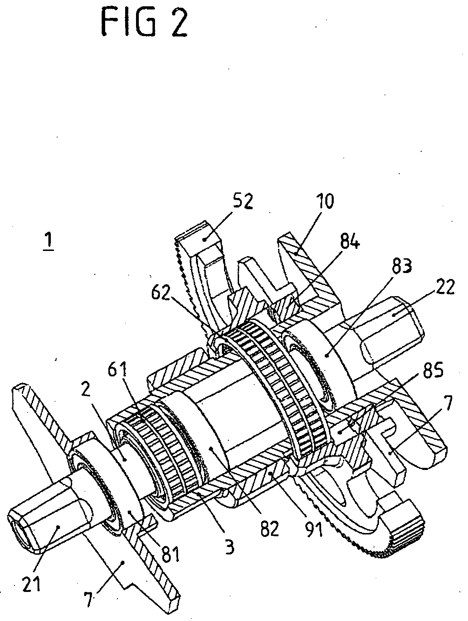

Fig. 2 zeigt in geschnittener perspektivischer Darstellung die Antriebseinrichtung 1 mit den koaxial zur Tretkurbelwelle 2 angeordneten Bauteilen der Antriebseinrichtung 1.

Die Tretkurbelwelle 2 ist auf der einen, in Fig. 2 links dargestellten Seite über ein erstes Kugel- oder Wälzlager 81 drehbar aus dem Gehäuse 7 der Antriebseinrichtung 1 herausgeführt, so dass der aus dem Gehäuse 7 ragende Zapfen 21 der Tretkurbelwelle 2 mit der einen Tretkurbel 23 gemäß Fig. 1 verbunden werden kann. Die koaxial zur Tretkurbelwelle 2 angeordnete Hohlwelle 3 ist über zweite und dritte Kugel- oder Wälzlager 82, 83 drehbar gegenüber der Tretkurbelwelle 2 und über ein viertes Kugel- oder Wälzlager 84 drehbar im Gehäuse 7 der Antriebseinrichtung 1 gelagert. An ihrem dem aus dem Gehäuse 7 ragenden Zapfen 21 der Tretkurbelwelle 2 entgegen gesetzten Ende ist die Hohlwelle 3 aus dem Gehäuse 7 herausgeführt und weist außerhalb des Gehäuses 7 der Antriebseinrichtung 1 den Kettenradflansch 10 auf, an dem das Kettenrad 11 gemäß Fig. 1 befestigt ist, das zusammen mit der auf dem Kettenrad 11 abwälzenden Kette und dem Ritzel des Hinterrades das Kettengetriebe des Elektrorades bildet.

Zwischen der Tretkurbelwelle 2 und der Hohlwelle 3 ist die als Klemmkörperfreilauf ausgebildete erste drehrichtungsabhängig geschaltete Kupplung 61 angeordnet, die die Tretkurbelwelle 2 mit der Hohlwelle 3 durch Sperren des Klemmkörperfreilaufs koppelt, wenn die Drehrichtung der Tretkurbelwelle 2 ein Vorwärtsfahren des Elektrorades bewirkt. In der entgegengesetzten Drehrichtung der Tretkurbelwelle 2 bewirkt die erste drehrichtungsabhängig geschaltete Kupplung 61 einen Freilauf zwischen Tretkurbelwelle 2 und Hohlwelle 3, so dass sich die Tretkurbelwelle 2 unabhängig von der Hohlwelle 3 drehen kann.

Das auf der Hohlwelle 3 über ein fünftes Kugel- oder Wälzlager 85 drehbar gelagerte Abtriebszahnrad 52 des zweistufigen Stirnradgetriebes 5 ist über die zweite drehrichtungsabhängig geschaltete Kupplung 62, die vorzugsweise ebenfalls als Klemmkörperfreilauf ausgebildet ist, mit der Hohlwelle 3 drehbar verbunden. Da die Drehrichtung des aus dem Elektromotor 4 und dem Getriebe 5 bestehenden elektromotorischen Antriebs stets der Vorwärtsfahrtrichtung des Elektrorades entspricht, kommt es bei der Einleitung eines elektromotorisch erzeugten Drehmoments in die Hohlwelle 3 auf die Drehzahldifferenz zwischen der Drehzahl des elektromotorischen Antriebs, der Hohlwelle 3 und der Tretkurbelwelle 2 an. Ist die Drehzahl des Abtriebszahnrades 52 des elektromotorischen Antriebs größer als die Drehzahl der Hohlwelle 3, so koppelt die zweite drehrichtungsabhängig geschaltete Kupplung 62 den elektromotorischen Antrieb fest mit der Hohlwelle 3 durch Sperren der Klemmrollen der als Klemmkörperfreilauf ausgebildeten zweiten drehrichtungsabhängig geschalteten Kupplung 62, so dass das fest mit der Hohlwelle 3 verbundene Kettenrad 11 das elektromotorische Drehmoment auf das Kettengetriebe überträgt.

Befindet sich die Tretkurbelwelle 2 mangels Muskelkraft betätigten Antriebs im Stillstand oder weist die Tretkurbelwelle 2 eine geringere Drehzahl auf als die Hohlwelle 3, so entkoppelt die erste drehrichtungsabhängig geschaltete Kupplung 61 die Hohlwelle 3 von der Tretkurbelwelle 1, so dass kein Drehmoment vom elektromotorischen Antrieb auf die Tretkurbelwelle 2 übertragen wird und damit keine Kräfte an dem mit den Tretkurbeln 23, 24 verbundenen Pedalen auftreten. Diese Freilauffunktion kann direkt zum elektromotorisch angetriebenen Fahren im E-Bike-Betrieb oder als Schiebe- bzw. Anfahrhilfe für ein Pedelec bis 6 km/h benutzt werden. Wird die erfindungsgemäße Antriebseinrichtung für ein Pedelec eingesetzt, so wird beim rein elektromotorischen Fahren mit größerer Geschwindigkeit als der zugelassenen Schiebe- oder Anfahrgeschwindigkeit von 6 km/h oder beim Überschreiten einer vorgegebenen Zeitspanne der Elektromotor 4 über die Steuerelektronik 9 abgeschaltet.

Bei Verwendung der Antriebseinrichtung 1 für ein Pedelec ist es erforderlich, die für ein Vorwärtsfahren des Pedelecs aufgebrachte Leistung in einen elektromotorisch erzeugten und über die zweite drehrichtungsabhängig geschaltete Kupplung 62 auf die Hohlwelle 3 übertragenen Leistungsanteil und einen durch Muskelkraft erzeugten und von der Tretkurbelwelle 2 über die erste drehrichtungsabhängig geschaltete Kupplung 61 auf die Hohlwelle 3 übertragenen Leistungsanteil aufzuteilen. Dabei bestimmt die Drehzahl der Tretkurbelwelle 2 die Drehzahl der Hohlwelle 3 und damit des Kettenrades 11 für den Kettenantrieb am Hinterrad und wird durch die Muskelkraft des Fahrers vorgegeben.

Das von der Tretkurbelwelle 2 abgegebene Drehmoment resultiert aus der Summe der beiden über die Tretkurbeln 23, 24 erzeugten Teildrehmomente und wird auf die Hohlwelle 3 in dem Bereich zwischen der ersten und zweiten drehrichtungsabhängig geschalteten Kupplung 61, 62 auf die Hohlwelle 3 übertragen. Daher kann - wie nachstehend näher erläutert wird - durch die Anordnung eines Drehmomentsensors zwischen den beiden drehrichtungsabhängig geschalteten Kupplungen 61, 62 am äußeren Umfang der Hohlwelle 3 das von der Tretkurbelwelle 2 abgegebene Drehmoment sowie der Tretkurbelwelle 2 ermittelt werden. Zur Erfassung der Drehzahl und Drehrichtung der Tretkurbelwelle 2 ist ein weiterer Sensor vorgesehen.

Aus den sensorisch erfassten Drehmoment- und Drehzahlwerten wird über die Steuerelektronik 9 die durch den Fahrer durch Muskelkraft aufgebrachte Leistung ermittelt und über die Steuerelektronik 9 die vom Elektromotor 4 abzugebende elektromotorische Leistung zur Unterstützung des Fahrers gesteuert. Über ein Bedienteil kann der Grad der Leistungsaufteilung zwischen der vom Fahrer durch Muskelkraft erzeugten Leistung und der Leistung des elektromotorischen Antriebs, das heißt der Unterstützungsgrad bzw. Prozentsatz der vom Elektromotor 4 hinzu zu gebenden Leistung eingestellt und gesteuert werden.

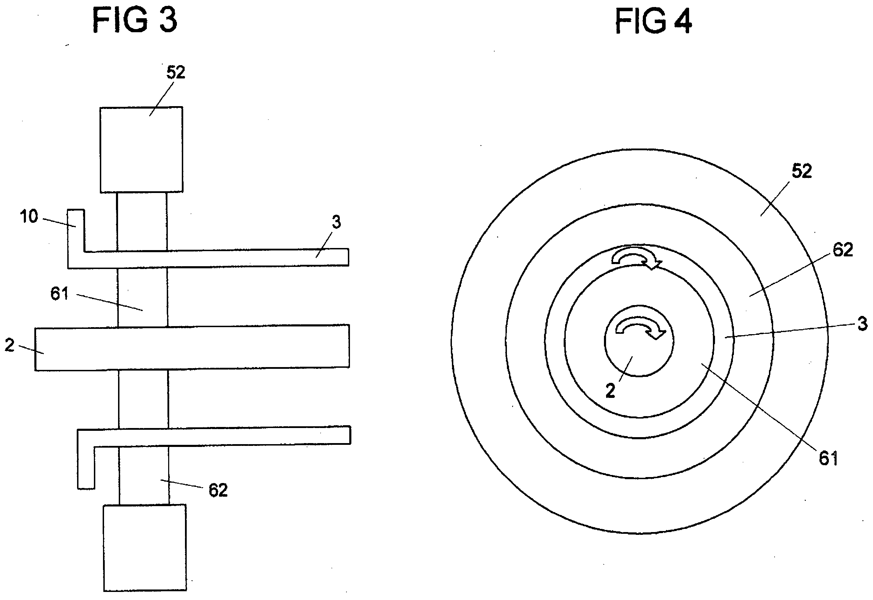

In den Fig. 3 bis 5 sind die verschiedenen Betriebsarten der Antriebseinrichtung mit Freilauffunktion schematisch dargestellt.

Fig. 3 zeigt schematisch den Kraftfluss von der Tretkurbelwelle 2 über die erste drehrichtungsabhängig geschaltete Kupplung 61 zur Hohlwelle 3 sowie vom Abtriebszahnrad 52 des elektromotorischen Antriebs über die zweite drehrichtungsabhängig geschaltete Kupplung 62 zur Hohlwelle 3 und damit zu dem fest mit der Hohlwelle 3 verbundenen Kettenrad 11 des Kettengetriebes des Elektrorades.

Bei einem schematisch in Fig. 4 dargestellten reinen Fahrradbetrieb wird über die Tretkurbeln 23, 24 ein Drehmoment in der Tretkurbelwelle 2 erzeugt. Die Tretkurbelwelle 2 wird aufgrund der in Vorwärts-Fahrtrichtung gerichteten Drehbewegung über die erste drehrichtungsabhängig geschaltete Kupplung 61 drehfest mit der Hohlwelle 3 verbunden, so dass das von der Tretkurbelwelle 2 abgegebene Drehmoment auf das Kettenrad 11 und damit auf das Kettengetriebe des Elektrorades übertragen wird.

Wird vom Fahrer keine Kraft auf die Pedale ausgeübt, und dadurch über die Tretkurbeln 23, 24 kein Drehmoment in der Tretkurbelwelle 2 erzeugt, so wird der üblicherweise mit dem Kettenritzel des Hinterrades verbundene Freilauf wirksam, so dass keine Drehbewegung über das Kettengetriebe auf das Kettenrad 11 übertragen wird.

Beim Fahren mit elektromotorischer Unterstützung wird zusätzlich zu dem von der Tretkurbelwelle 2 über die erste drehrichtungsabhängig geschaltete Kupplung 61 abgegebenen Drehmoment ein vom elektromotorischen Antrieb erzeugtes Drehmoment über die zweite drehrichtungsabhängig geschaltete Kupplung 62 auf die Hohlwelle 3 übertragen, so dass an dem mit der Hohlwelle 3 fest verbundenen Kettenrad 11 die Summe beider Drehmomente für die Vorwärtsfahrt des Elektrorades zur Verfügung steht.

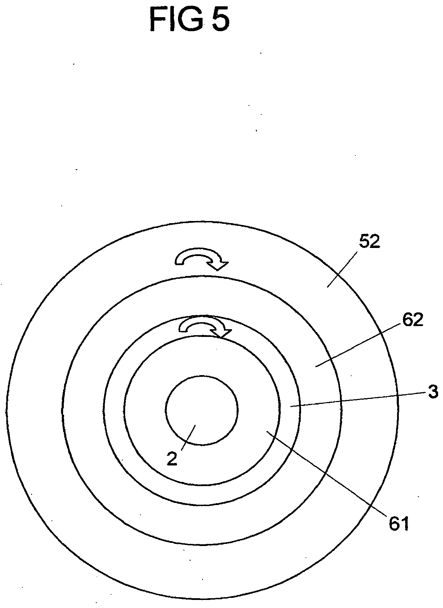

Fig. 5 zeigt die Freilauffunktion der Antriebseinrichtung bei einem reinen elektromotorischen Antrieb, bei dem ein Drehmoment vom Abtriebszahnrad 52 über die zweite drehrichtungsabhängig geschaltete Kupplung 62 auf die Hohlwelle 3 und damit auf das mit der Hohlwelle 3 verbundene Kettenblatt 11 übertragen wird. Dabei kann sich die Tretkurbelwelle 2 im Stillstand befinden, so dass die Wirkrichtung des Freilaufes entgegengesetzt zu dem vorstehend für den Fahrradbetrieb beschriebenen Freilauf verläuft.

Für die Erfassung der zulässigen Maximalgeschwindigkeit von 6 km/h für den ausschließlich elektromotorischen Betrieb eines Pedelecs als Schiebe- oder Anfahrhilfe bzw. der maximalen Geschwindigkeit von 25 km/h für den gesetzlich zulässigen elektromotorisch unterstützten Hybridbetrieb eines Pedelecs sind Sensoren erforderlich, die Sensorsignale an die verarbeitende Steuerelektronik 9 abgeben. Zu diesem Zweck wird neben der vorstehend beschriebenen sensorischen Erfassung der Drehzahl und des Drehmoments der Tretkurbelwelle 2 die Bewegungsgeschwindigkeit des Pedelecs erfasst und für den Pedelec-Betrieb verarbeitet.

Für die Aufteilung der Antriebsleistung an dem mit der Hohlwelle verbundenen Kettenrad 11 auf den vom Fahrer durch Muskelkraft erzeugten Leistungsanteil und den elektromotorischen erzeugten Leistungsanteil ist es erforderlich, das Drehmoment der Tretkurbelwelle 2 zu erfassen. Bei der Erfassung des Tretmoments der Tretkurbelwelle 2, die auf einer Messung der Verformung der Tretkurbelwelle 2 aufgrund der über die Tretkurbeln übertragenen Pedalkräfte kommt es jedoch zu Fehlern bzw. zu nicht immer eindeutigen Messergebnissen. Das Drehmoment der Tretkurbelwelle 2 ergibt sich aus der Kraft, die vom Fahrer auf die an den Wellenenden der Tretkurbelwelle 2 angeordneten Tretkurbeln 23, 24 erzeugt wird. Dabei ist der Verlauf des für die Erfassung des Drehmoments der Tretkurbelwelle 2 zu erfassenden Verdrehwinkels dem durch die beiden Tretkurbeln 23, 24 als Summe beider Einzelmomente erzeugten Drehmoment nicht proportional, da der Verlauf der Verformung durch die jeweilige Stelle der Tretkurbelwelle 2 bestimmt wird, an der das Drehmoment für den Antrieb weitergeleitet wird. Dabei ist die eine Tretkurbel 24 in einem geringen Abstand vom antreibenden Kettenrad 11 mit der Tretkurbelwelle 2 verbunden, während die andere Tretkurbel 23 am gegenüberliegenden Ende der Tretkurbelwelle 2 angeordnet ist.

Das über die Tretkurbeln 23, 24 erzeugte Drehmoment steht aber im Gleichgewicht mit dem Drehmoment zum Antrieb am Kettenrad 11, wobei das Kettenrad 11 asymmetrisch zwischen den Tretkurbeln 23, 24 angebracht ist und die jeweilige Tretkurbel 23, 24 nur eine Verformung der Tretkurbelwelle 2 auf der jeweiligen Seite erzeugt. Für eine genaue Erfassung der Summe des von beiden Tretkurbeln 23, 24 eingeleiteten Drehmomentes ist demzufolge das separate Messen für das durch die einzelnen Tretkurbeln 23, 24 erzeugte Drehmoment mit anschließender Summenbildung erforderlich.

Da bei der vorstehend anhand der Fig. 1 bis 5 beschriebenen Antriebseinrichtung 1 das von den Tretkurbeln 23, 24 erzeugte Drehmoment an die mit dem Kettenrad 11 verbundene Hohlwelle 3 über die erste drehrichtungsabhängig geschaltete Kupplung 61 weitergeleitet wird, ist der Verdrehwinkel zwischen der Stelle, an der das Drehmoment von der Tretkurbelwelle 2 in die Hohlwelle 3 eingeleitet wird, bis zur Verbindung der Hohlwelle 3 mit dem Freilauf 62 proportional zur Summe des aus beiden Tretkurbeln 23, 24 erzeugten Drehmomentes. Wird durch den elektromotorischen Antrieb ein weiteres Drehmoment über die zweite drehrichtungsabhängig geschaltete Kupplung 62 in die Hohlwelle 3 eingeleitet, so ist der Verdrehwinkel zwischen der Stelle der Drehmomenteinleitung durch die Tretkurbelwelle 2 und die Stelle der elektromotorisch bedingten Drehmomenteinleitung proportional dem Drehmoment aus der Tretkurbelwelle 2 und kann dementsprechend zwischen den beiden drehrichtungsabhängigen Kupplungen 61, 62 gemessen werden.

Beim Betrieb der Antriebseinrichtung 1 als Anfahrhilfe für ein Pedelec mit einem rein elektromotorischen Antrieb bis zu einer Höchstgeschwindigkeit von 6 km/h wird das vom Elektromotor 4 abgegebene Motordrehmoment über die zweite drehrichtungsabhängig geschaltete Kupplung 62 auf die mit dem antriebsseitigen Kettenrad 11 verbundene Hohlwelle 3 übertragen. Da die Tretkurbelwelle 2 über die erste drehrichtungsabhängig geschaltete Kupplung 61 zwischen der Tretkurbelwelle 2 und der Hohlwelle 3 von der Hohlwelle 3 entkoppelt ist, wird kein Drehmoment von der Hohlwelle 3 zur Tretkurbelwelle 2 übertragen, so dass es zu keiner Bewegung der über die Tretkurbeln 23, 24 mit der Tretkurbelwelle 2 verbundenen Pedale kommen kann.

Ist die vom elektromotorischen Antrieb abgegebene Drehzahl kleiner als die Drehzahl der Tretkurbelwelle 2 und damit kleiner als die Drehzahl der Hohlwelle 3, so wird kein Drehmoment an den elektromotorischen Antrieb in Gegenrichtung abgegeben, weil über die zwischen dem elektromotorischen Antrieb und der Hohlwelle 3 angeordnete zweite drehrichtungsabhängig geschaltete Kupplung 62 den elektromotorische Antrieb von der Hohlwelle 3 trennt.

Beim Fahren mit größerer Geschwindigkeit als der zugelassenen Anfahrgeschwindigkeit von maximal 6 km/h oder bei einer Zeitüberschreitung wird der Elektromotor 4 über die Steuerelektronik 9 abgeschaltet. Ohne die Beschränkung durch die Steuerelektronik 9 wäre somit durch die erfindungsgemäße Antriebseinrichtung auch ein rein elektrischer Fahrbetrieb des Elektrorades oder eBike-Betrieb realisierbar.

Die vorstehend anhand der Fig. 1 bis 5 beschriebene Antriebseinrichtung für ein Pedelec mit Freilaufbetrieb kann zusätzlich bzw. alternativ mit einer Einrichtung zur Betätigung einer Rücktrittbremse ausgerüstet werden. Dabei wirken die Bauelemente zur Betätigung der Rücktrittbremse so, dass die fest mit dem Kettenrad 11 verbundene Hohlwelle 3 entgegen der Drehrichtung für einen Vorwärtsfahrbetrieb des Elektrorades gedreht werden kann.

Zu diesem Zweck muss die diese Drehrichtung der Hohlwelle 3 verhindernde erste drehrichtungsabhängig geschaltete Kupplung 61 für die Zeit der Betätigung der Rücktrittbremse überbrückt werden, damit ein Drehmoment von der Tretkurbelwelle 2, die über die Tretkurbeln 23, 24 mit den durch Muskelkraft betätigten Pedalen des Pedelecs verbunden ist, in entgegen gesetzter Richtung zur Hohlwelle 3 übertragen werden kann. Während der Betätigung der Rücktrittbremse ist der elektromotorische Antrieb durch die zweite drehrichtungsabhängige Kupplung 62 für diese Drehrichtung so mit der Hohlwelle 3 verbunden, dass ein Drehmoment von der Hohlwelle 3 zum elektromotorischen Antrieb übertragen wird. Gleichzeitig wird bei einer Betätigung der Rücktrittbremse der Elektromotor 4 abgeschaltet, da er ansonsten gegen die Betätigungsdrehrichtung der Rücktrittbremse ein Drehmoment erzeugen würde.

Die Abschaltung des Motorbetriebs erfolgt durch die den Elektromotor 4 ansteuernde Steuerelektronik 9 im Zusammenhang mit der sensorischen Erfassung der Drehzahl und Drehrichtung der mit den Tretkurbeln 23, 24 verbundenen Tretkurbelwelle 2, unabhängig von der Drehzahl der mit dem Kettenrad 11 fest verbundenen Hohlwelle 3, indem die Steuerelektronik 9 bei Richtungsumkehr des für den Vorwärtsfahrbetrieb des Pedelecs sensorisch erfassten Drehmomentes auf der Hohlwelle 3 den Elektromotor 4 abschaltet und damit sicherstellt, dass bei Betätigung der Rücktrittbremse kein elektromotorischer Eingriff in den Betrieb erfolgt.

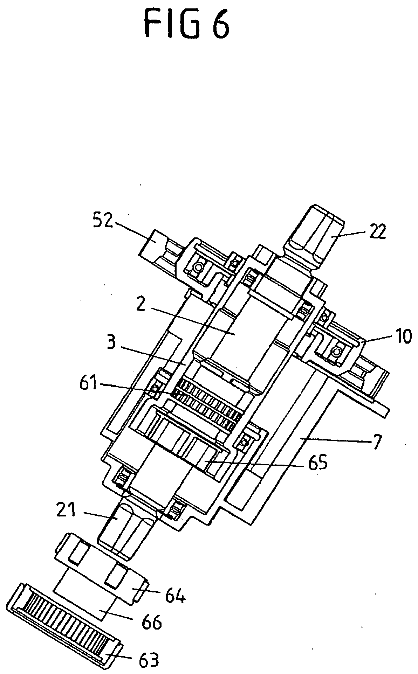

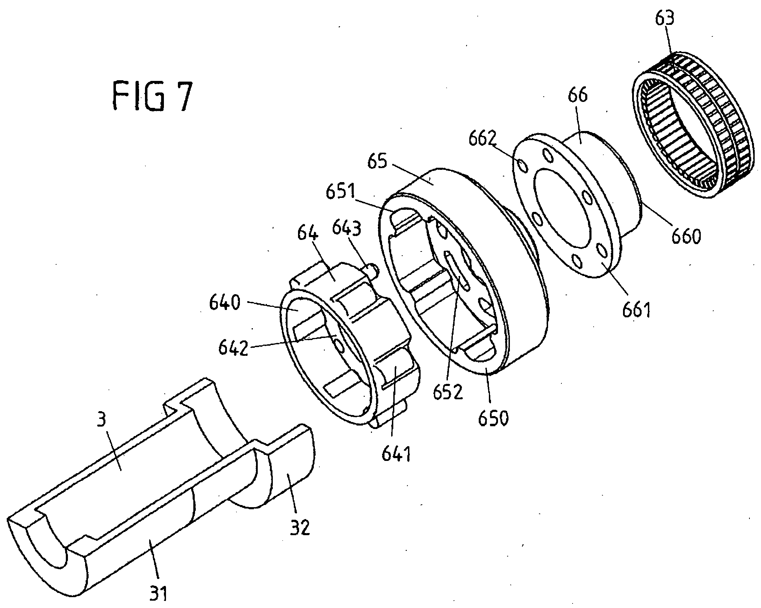

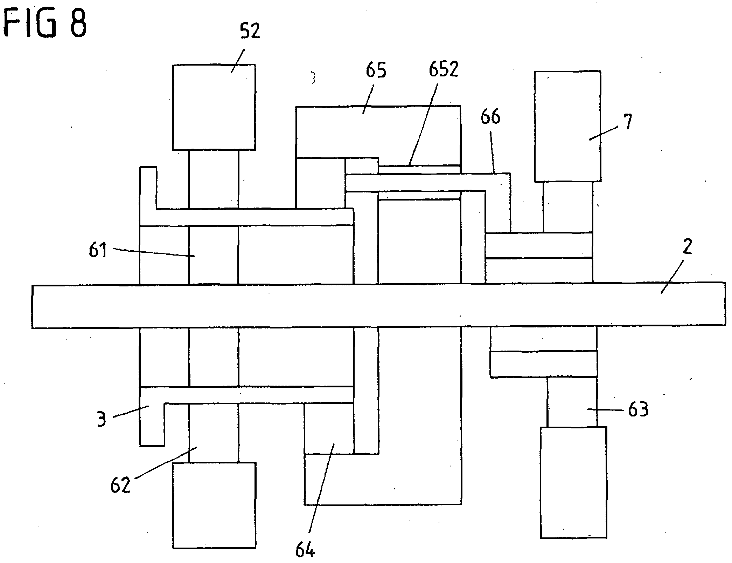

Zur Realisierung einer Rücktrittbremse weist die Antriebseinrichtung 1 gemäß den Fig. 6 bis 10 einen Klemmrollenfreilauf auf, der gemäß den Fig. 6 bis 8
- einen Betätigungsfreilauf 63, dessen zylindrische Außenfläche drehfest mit dem Gehäuse 7 und einem koaxial frei beweglich zur Tretkurbelwelle 2 angeordneten Schaltelement 66 verbunden ist,
- einen drehfest mit der Tretkurbelwelle 2 verbundenen Freilaufkäfig 65 mit einem topfförmigen Gehäuse 650 mit an der zylindrischen Innenfläche angeordneten Schrägfläche 651 und in einem kreisringförmigen Boden angeordneten Langlöchern 652,
- ein in den Freilaufkäfig 65 eingesetztes Schaltgehäuse 64 mit einem topfförmigen Gehäuse 640 mit in den Nuten seiner zylindrischen Außenfläche angeordneten Klemmrollen 641 und in seinem kreisringförmigen Boden 642 angeordneten Bohrungen oder Stiften 643,
- ein Schaltelement 66 mit einem zylinderförmigen Körper 660 und einem Ringflansch 661 mit Bohrungen 662 zur Aufnahme der am kreisringförmigen Boden 642 des Schaltgehäuses 64 angeordneten, durch die Langlöcher 652 des Freilaufkäfigs 65 geführten Stiften 643 oder Befestigungsmitteln, die durch die Bohrung im kreisringförmigen Boden 642 des Schaltgehäuses 64, die Langlöcher 652 des Freilaufkäfigs 65 und Bohrungen 662 des Schaltelements 660 gesteckt sind und das Schaltelement 66 mit dem Schaltgehäuse 64 verbinden,
aufweist.

Die Betätigung der Rücktrittbremse erfolgt, indem die mit dem Kettenrad 11 fest verbundene Hohlwelle 3 über den Klemmrollenfreilauf entgegen ihrer Drehrichtung bei Vorwärtsfahrt gedreht wird, wobei der Freilaufkäfig 65 fest mit der Tretkurbelwelle 2 in Verbindung steht und somit das durch die Tretkurbeln 23, 24 entgegen der Drehrichtung ihrer Betätigung in Vorwärtsfahrtrichtung auf die Tretkurbelwelle 2 aufgebrachte Drehmoment auf das Kettenrad 11 übertragen wird. Für die Aufnahme und Abstützung der Klemmrollen 641 im Schaltgehäuse 64 weist die Hohlwelle 3 in axialer Richtung neben einem ersten hohlzylindrischen Abschnitt 31 zur Aufnahme der vorstehend anhand der Fig. 1 bis 5 beschriebenen Bauelemente der Antriebseinrichtung einen zweiten, erweiterten hohlzylindrischen Abschnitt 32 auf.

Das Spannen des Klemmrollenfreilaufs und damit die Herstellung einer drehfesten Verbindung zwischen der Hohlwelle 3 und der Tretkurbelwelle 2 bei einer Drehrichtung der Tretkurbelwelle 2 entgegen der Vorwärtsfahrtrichtung des Elektrorades zur Betätigung der Rücktrittbremse erfolgt über das Schaltgehäuse 64, das drehfest mit dem Schaltelement 66 verbunden ist, wobei das Schaltelement 66 mit dem Betätigungsfreilauf 63 verbunden ist, dessen Außenfläche drehfest am Gehäuse 7 verankert ist. Das mit dem Schaltgehäuse 64 verbundene Schaltelement 66 des Betätigungsfreilaufs 63 ist dagegen koaxial freibeweglich zur Tretkurbelwelle 2 angeordnet.

Bei in Vorwärtsfahrtrichtung drehender Tretkurbelwelle 2 überträgt der Betätigungsfreilauf 63 kein Drehmoment, so dass die Klemmrollen 641 des Schaltgehäuses 64 in einer Position gegenüber den Schrägflächen 651 des Freilaufkäfigs 65 gehalten werden, wo keine Verbindung zwischen der Hohlwelle 3 und der Tretkurbelwelle 2 hergestellt wird.

Die für den Fahrbetrieb des Pedelecs vorgesehene erste drehrichtungsabhängig geschaltete Kupplung 61 löst bei der zur Fahrtrichtung entgegen gesetzten Drehrichtung der Tretkurbelwelle 2 die drehfeste Verbindung zwischen der Hohlwelle 3 und der Tretkurbelwelle 2. Der drehfest auf der Tretkurbelwelle 2 befindliche Freilaufkäfig 65 bewegt über seine Schrägflächen 651 die Klemmkörper 641 des Schaltgehäuses 64 in Klemmrichtung gegen die Hohlwelle 3. Gleichzeitig bewegen die in den Nuten des Schaltgehäuses 64 geführten Klemmkörper 641 das Schaltgehäuse 64 entgegen der Freilaufrichtung des Betätigungsfreilaufes 63. Dadurch sperrt der Betätigungsfreilauf 63 und hält das Schaltgehäuse 64, so dass die Tretkurbelwelle 2 und die Hohlwelle 3 entgegen der Vorwärtsfahrtrichtung des Elektrorades drehfest miteinander verbunden werden und das mit der Hohlwelle 3 verbundene Kettenrad 11 die Rücktrittbremskraft über die Kette zum Kettenritzel des Hinterrades übertragen und damit die Rücktrittbremsfunktion aktivieren kann.

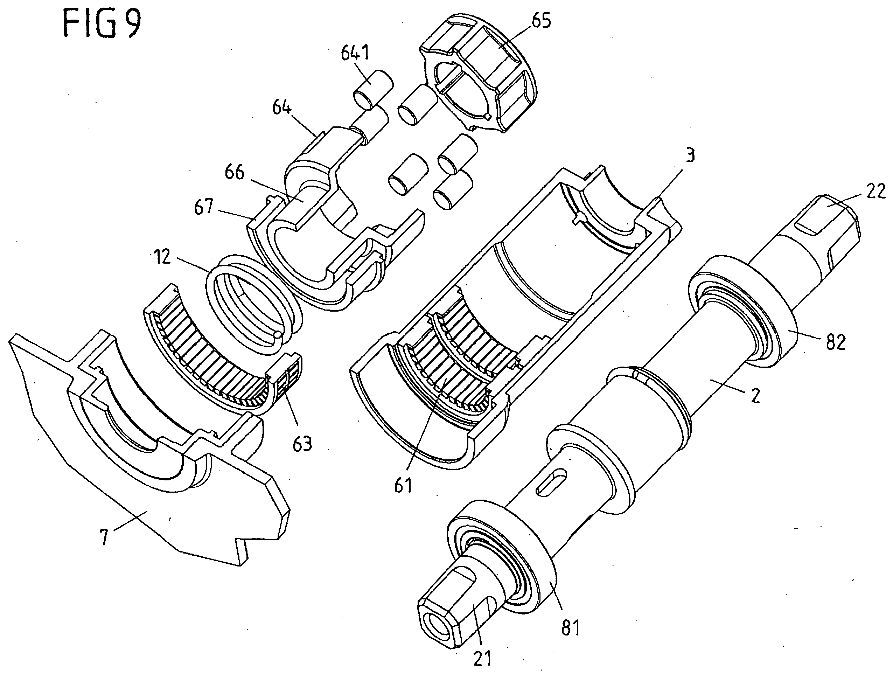

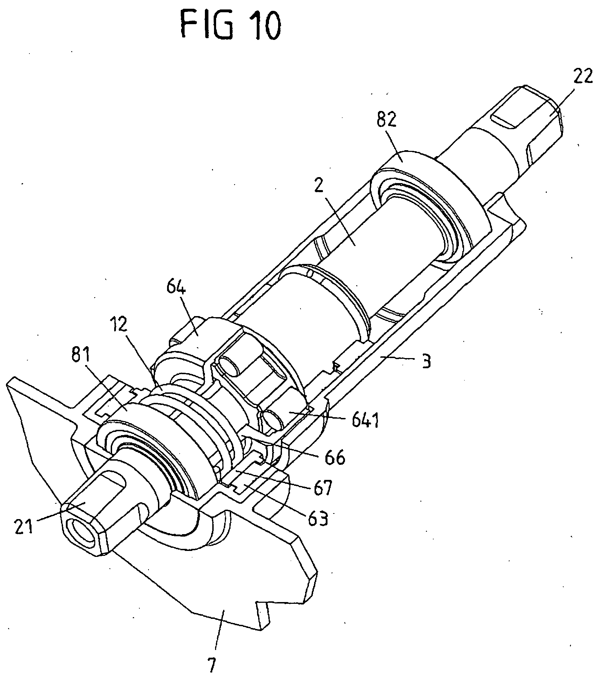

Alternativ bzw. in Ergänzung zu der vorstehend beschriebenen Ausgestaltung des Klemmrollenfreilaufs für die Betätigung der Rücktrittbremse kann das Schaltgehäuse 64 anstelle einer drehfesten Verbindung mit dem Schaltelement 66 auch drehelastisch mit dem Schaltelement 66 verbunden werden. Zu diesem Zweck wird entsprechend den Fig. 9 und 10, in denen die weiteren, mit denselben Bezugsziffern versehenen Bauteile des Klemmrollenfreilaufs mit den vorstehend beschriebenen Bauteilen übereinstimmen, so dass hierauf Bezug genommen wird, eine zylindrische Dreh- oder Spiralfeder 12 auf die Tretkurbelwelle 2 aufgesteckt. Ein Ende der Drehfeder 12 ist fest mit einem Freilaufstern 67 des Betätigungsfreilaufs 63 verbunden, während das andere Ende der Drehfeder 12 am Schaltgehäuse 64 befestigt ist.

Die drehelastische Verbindung des Freilaufsterns 67 des Betätigungsfreilaufs 63 mit dem Schaltgehäuse 64 weist den Vorteil auf, dass das vom Schaltgehäuse 64 über die Klemmrollen 641 erzeugte Abstützmoment progressiv drehelastisch auf den Freilaufstern 67 des Betätigungsfreilaufs 63 übertragen wird. Dadurch ist eine Winkelbeweglichkeit der Tretkurbelwelle 2 in Rückwärtsdrehrichtung bei gesperrtem Betätigungsfreilauf 63 möglich. Gleichzeitig kann innerhalb des möglichen Drehwinkels, der durch die Blockung der Drehfeder 12 gegeben ist, das Kettenrad 11 gegen die Vorwärtsrichtung gedreht werden und so ein eventuell vorhandenes Spiel bis zur Betätigung der Rücktrittbremse ausgleichen.

### Bezugszeichenliste

- 1: Antriebseinrichtung
- 2: Tretkurbelwelle
- 3: Hohlwelle
- 4: Elektromotor
- 5: Getriebe
- 7: Gehäuse
- 9: Steuerelektronik
- 10: Kettenradflansch
- 11: Kettenrad
- 12: Drehfeder
- 21, 22: Zapfen
- 23, 24: Tretkurbeln
- 31: Erster hohlzylindrischer Abschnitt der Hohlwelle
- 32: Zweiter, erweiterter hohlzylindrischen Abschnitt der Hohlwelle
- 40: Motorwelle
- 51: Doppelzahnrad
- 52: Abtriebszahnrad
- 61: erste drehrichtungsabhängig geschaltete Kupplung
- 62: zweite drehrichtungsabhängig geschaltete Kupplung
- 63: Betätigungsfreilauf
- 64: Schaltgehäuse
- 65: Freilaufkäfig
- 66: Schaltelement
- 67: Freilaufstern des Betätigungsfreilaufs
- 81 - 85: Kugel- oder Wälzlager
- 640: topfförmiges Gehäuse des Schaltgehäuses
- 641: Klemmrollen
- 642: kreisringförmiger Boden des Schaltgehäuses
- 643: Bohrungen oder Stifte
- 650: topfförmiges Gehäuse des Freilaufsterns oder Freilaufkäfigs
- 651: Schrägfläche des Freilaufsterns oder Freilaufkäfigs
- 652: Langlöcher des Freilaufsterns oder Freilaufkäfigs
- 660: zylinderförmiger Körper des Schaltelements
- 661: Ringflansch des Schaltelements

## Patentansprüche

1. Antriebseinrichtung (1) für ein Elektrorad, insbesondere für ein elektromotorisch und mit Muskelkraft hybrid betriebenes Pedelec, mit
- einem Antriebsgehäuse (7), in dem eine Hohlwelle (3) gelagert ist, die mit einem Kettenrad (11) eines Kettengetriebes des Elektrorades verbunden ist,
- einer koaxial zur Hohlwelle (3) angeordneten Tretkurbelwelle (2), die an beiden Enden mit Tretkurbeln (23, 24) verbunden ist,
- einer ersten, zwischen der Hohlwelle (3) und der Tretkurbelwelle (2) angeordneten drehrichtungsabhängig geschalteten Kupplung (61) und
- einem Elektromotor (4), dessen Abtrieb über eine zweite drehrichtungsabhängig geschaltete Kupplung (62) mit der Hohlwelle (3) verbunden ist,
**dadurch gekennzeichnet,**
**dass** die Hohlwelle (3) derart ausgebildet ist, dass sie in beide Drehrichtungen der Tretkurbelwelle (2) mit der Tretkurbelwelle (2) gekoppelt.

2. Antriebsanrichtung nach Anspruch 1, **dadurch gekennzeichnet, dass** eine Einrichtung zur Betätigung einer Rücktrittbremse zwischen der Tretkurbelwelle (2) und der Hohlwelle (3) angeordnet ist, die bei einer Kopplung der Tretkurbelwelle (2) mit der Hohlwelle (3) durch die erste dreheinrichtungsabhängig geschaltete Kupplung (61) freiläuft und in der entgegen gesetzten Drehrichtung die Tretkurbelwelle (2) mit der Hohlwelle (3) koppelt.

3. Antriebseinrichtung nach Anspruch 1 oder 2, **dadurch gekennzeichnet, dass** der Elektromotor (4) von einer Steuerelektronik (9) ansteuerbar ist, die mit Sensoren (91) zur Erfassung der Drehzahl, Drehrichtung und des Drehmoments der Tretkurbelwelle (2) verbunden ist und den Elektromotor (4) bei einer der Vorwärtsfahrtrichtung des Elektrorades entgegen gesetzten Drehrichtung und/oder entgegen gerichteten Drehmoments der Tretkurbelwelle (2) abschaltet.

4. Antriebseinrichtung nach Anspruch 2, **dadurch gekennzeichnet, dass** die Einrichtung zur Betätigung einer Rücktrittbremse aus einem Klemmrollenfreilauf mit einem drehfest mit der Tretkurbelwelle (2) verbundenen Freilaufkäfig (65), einem Schaltgehäuse (64) mit in Nuten angeordneten Klemmrollen (641) und einem mit dem Schaltgehäuse (64) in Umfangsrichtung drehelastisch verbundenen und koaxial frei beweglich auf der Tretkurbelwelle (2) angeordneten Schaltelement (66) eines mit seiner Außenfläche drehfest mit dem Gehäuse (7) verbundenen Betätigungsfreilaufs (63) besteht.

5. Antriebseinrichtung nach Anspruch 4, **dadurch gekennzeichnet, dass** das Schaltelement (66) mit dem einen Ende und das Schaltgehäuse (64) mit dem anderen Ende einer zylindrischen, auf die Tretkurbelwelle (2) aufgesteckten Dreh- oder Spiralfeder (12) verbunden sind.

6. Antriebseinrichtung nach mindestens einem der vorangehenden Ansprüche, **dadurch gekennzeichnet, dass** die Motorwelle (40) des Elektromotors (4) über ein vorzugsweise aus einem mehrstufigen Untersetzungsgetriebe unterschiedlicher Getriebebauarten bestehenden Getriebe (5) und die zweite drehrichtungsabhängig geschaltete Kupplung (62) mit der Hohlwelle (3) verbunden ist.

7. Antriebseinrichtung nach Anspruch 6, **dadurch gekennzeichnet, dass** das mehrstufige Untersetzungsgetriebe als zweistufiges Stirnradgetriebe mit einem mit der Motorwelle (40) verbundenen Ritzel, einem mit dem Ritzel kämmenden Stirnrad großen Durchmessers eines Doppelzahnrades (51) und einem mit einem Stirnrad kleinen Durchmessers des Doppelzahnrades (51) kämmenden Abtriebsstirnrad (52) ausgebildet ist, das koaxial mit der Hohlwelle (3) verbunden ist.

8. Antriebseinrichtung nach mindestens einem der vorangehenden Ansprüche, **dadurch gekennzeichnet, dass** die den Elektromotor (4) ansteuernde Steuerelektronik (9) mit dem Ausgangssignal eines die Geschwindigkeit des Elektrorades erfassenden Sensors beaufschlagt ist.

9. Antriebseinrichtung nach mindestens einen der vorangehenden Ansprüche, **dadurch gekennzeichnet, dass** die über die Tretkurbeln (23, 24) eingeleiteten Drehmomente getrennt erfasst und an die Steuerelektronik (9) abgegeben werden, die die über die Tretkurbeln (23, 24) eingeleiteten Drehmomente summiert.

10. Antriebseinrichtung nach mindestens einen der vorangegangenen Ansprüche 1 bis 8, **dadurch gekennzeichnet, dass** zur Erfassung der über die Tretkurbeln (23, 24) eingeleiteten Drehmomente der Verdrehwinkel der Hohlwelle (3) zwischen der ersten drehrichtungsabhängig geschalteten Kupplung (61) und dem Kettenrad (11) gemessen wird.

11. Antriebseinrichtung nach mindestens einen der vorangehenden Ansprüche 1 bis 8, **dadurch gekennzeichnet, dass** zur Erfassung der über die Tretkurbeln (23, 24) eingeleiteten Drehmomente bei zusätzlicher Einleitung eines vom Elektromotor (4) abgegebenen Drehmoments der Verdrehwinkel der Hohlwelle (3) zwischen der ersten drehrichtungsabhängig geschalteten Kupplung (61) und der zweiten drehrichtungsabhängig geschalteten Kupplung (62) erfasst wird.

12. Antriebseinrichtung nach mindestens einem der vorangehenden Ansprüche, **dadurch gekennzeichnet, dass** die Steuerelektronik (9) bei von der Hohlwelle (3) durch die erste drehrichtungsabhängig geschaltete Kupplung (61) abgetrennter Tretkurbelwelle (2) die Drehzahl des Elektromotors (4) bis zu einem einstellbaren Drehmoment nachregelt und den Elektromotor (4) bei Überschreitung einer vorgegebenen Geschwindigkeit des Elektrorades ohne Einleitung eines Drehmoments über die Tretkurbelwelle (2) abschaltet.

13. Antriebseinrichtung nach Anspruch 12, **dadurch gekennzeichnet, dass** über ein Bedienteil des Elektrorades der Grad der Leistungsaufteilung zwischen dem über die Tretkurbelwelle (2) eingeleiteten Drehmoment und dem vom Elektromotor (4) abgegebenen Drehmoment einstellbar ist.

14. Antriebseinrichtung nach mindestens einem der vorangehenden Ansprüche, **dadurch gekennzeichnet, dass** die erste und zweite drehrichtungsabhängig geschaltete Kupplung (61, 62) aus einem Klemmkörperfreilauf mit einem Innen- und Außenring und zwischen dem Innen- und Außenring angeordneten Klemmkörpern besteht, wobei der Innen- oder Außenring in der den Innen- mit den Außenring koppelnden Drehrichtung des Innen- oder Außenringes Klemmrampen aufweist.

15. Antriebseinrichtung nach mindestens einem der vorangehenden Ansprüche, **dadurch gekennzeichnet, dass** das Elektrorad aus einem E-Bike oder einem Pedelec besteht und dass die Steuerelektronik (9) den elektromotorischen Antrieb ohne Rückwirkung auf die Tretkurbelwelle (2) ansteuert.

## Claims

1. A drive device (1) for an electric bicycle, in particular for a Pedelec operated in a hybrid fashion by an electric motor and by muscle force, with
- a drive housing (7), in which a hollow shaft (3) is mounted, which is connected to a chain wheel (11) of a chain transmission of an electric bicycle,
- a pedal crank shaft (2), which is arranged coaxially in respect to the hollow shaft (3) and which is connected at both ends to pedal cranks (23, 24),
- a first clutch (61), which is arranged between the hollow shaft (3) and the pedal crank shaft (2) and is shifted depending on the rotation direction and
- an electric motor (4), whose output is connected to the hollow shaft (3) via a second clutch (62) which is shifted depending on the rotation direction,
**characterized in that**
the hollow shaft (3) is formed such that it is coupled to the pedal crank shaft (2) in both rotation directions of the pedal crank shaft (2).

2. Drive device according to claim 1, **characterized in that** a device for actuating a back pedal brake is arranged between the pedal crank shaft (2) and the hollow shaft (3), which runs freely when coupling the pedal crank shaft (2) to the hollow shaft (3) by the first clutch (61) shifted depending on the rotation direction and couples the pedal crank shaft (2) to the hollow shaft (3) in the opposite rotation direction.

3. Drive device according to claim 1 or 2, **characterized in that** the electric motor (4) can be controlled by a control electronic (9), which is connected to sensors (91) for detecting the rotation speed, the rotation direction and the torsional moment of the pedal crank shaft (2) and switches off the electric motor (4) at a rotation direction opposite to the forward moving direction of the electric bicycle and/or an opposite torsional moment of the pedal crank shaft (2).

4. Drive device according to claim 2, **characterized in that** that the device for actuating the back pedal brake consists of a clamping roller free wheel with a free-wheel cage (65) connected torque-proof to the pedal crank shaft (2), a switching housing (64) with clamping rollers (641) arranged in groves and with a switching element (66) of an actuating free-wheel (63) connected with its outer surface torque-proof to the housing (7), wherein said switching element is connected to the switching housing (64) and arranged coaxially free-movable on the pedal crank shaft (2).

5. Drive device according to claim 4, **characterized in that** the switching element (66) is connected to the one end and the switching housing (64) is connected to the other end of a cylindrical torsion or spiral spring (12) attached on the pedal crank shaft (2).

6. Drive device according to at least one of the preceding claims, **characterized in that** the motor shaft (40) of the electric motor (4) is connected via a gear (5) which preferably consists of multi-level reduction gear of different gear types and the second clutch (62) shifted depending on the rotation direction is connected to the hollow shaft (3).

7. Drive device according to claim 6, **characterized in that** the multi-level reduction gear is designed as a two-level spur wheel gear with a pinion connected to the motor shaft (40), with a spur wheel of large diameter of a double-gear wheel (51) combing with the pinion and with an output spur wheel (52) combing with a spur wheel of small diameter of the double-gear wheel (51), which is connected coaxially to the hollow shaft (3).

8. Drive device according to at least one of the preceding claims, **characterized in that** the control electronic (9) controlling the electric motor (4) is supplied with the output signal of a sensor detecting the velocity of the electric bicycle.

9. Drive device according to at least one of the preceding claims, **characterized in that** the torsional moments introduced via the pedal cranks (23, 24) are detected separately and are delivered to the control electronic (9), which sums the torsional moments introduced via the pedal cranks (23, 24).

10. Drive device according to at least one of the preceding claims 1 to 8, **characterized in that** the twisting angle of the hollow shaft (3) between the first clutch (61) shifted depending on the rotation direction and the chain wheel (11) is measured for detecting the torsional moments introduced via the pedal cranks (23, 24).

11. Drive device according to at least one of the preceding claims 1 to 8, **characterized in that** the twisting angle of the hollow shaft (3) between the first clutch (61) shifted depending on the rotation direction and the second clutch (62) shifted depending on the rotation direction is detected for detecting the torsional moments introduced via the pedal cranks (23, 24) with additional introduction of a torsional moment delivered by the electric motor (4).

12. Drive device according to at least one of the preceding claims, **characterized in that** the control electronic (9) re-adjusts the rotation number of the electric motor (4) to an adjustable torsional moment if the pedal crank shaft (2) is separated from the hollow shaft (3) by the first clutch (61) shifted depending on the rotation direction and switches off the electric motor (4) when exceeding a specific velocity of the electric bicycle without introducing a torsional moment via the pedal crank shaft (2).

13. Drive device according to claim 12, **characterized in that** the degree of power distribution between the torsional moment introduced via the pedal crank shaft (2) and the torsional moment delivered by the electric motor (4) can be adjusted via an operating part of the electric bicycle.

14. Drive device according to at least one of the preceding, **characterized in that** the first and second switch (61, 62) shifted depending on the rotation direction consists of a clamping roller free-wheel with an inner and outer ring and clamping bodies arranged between the inner and outer ring, wherein the inner or outer ring comprise clamping ramps in the rotation direction of the inner or outer ring coupling the inner to the outer ring.

15. Drive device according to at least one of the preceding claims, **characterized in that** the electric bicycle consists of an E-bike or a Pedelec and that the control electronic (9) controls the electromotive drive without a retro-active effect onto the pedal crank shaft (2).

## Revendications

1. Dispositif d'entraînement (1) pour une bicyclette électrique, en particulier pour un Pedelec hybride fonctionnant avec un moteur électrique et avec la force musculaire, avec
- un boîtier d'entraînement (7), dans lequel est logé un arbre creux (3) qui est relié à une roue à chaîne (11) d'un engrenage par chaîne de la bicyclette électrique,
- un arbre de pédalier (2) qui est agencé coaxialement à l'arbre creux (3) et qui est relié aux deux extrémités à des pédaliers (23, 24),
- un premier couplage (61) monté selon le sens de rotation, agencé entre l'arbre creux (3) et l'arbre de pédalier (2) et
- un moteur électrique (4), dont la sortie est reliée par un second couplage (62) monté selon le sens de rotation à l'arbre creux (3),
**caractérisé en ce que**
l'arbre creux (3) est réalisé de telle manière qu'il soit couplé à l'arbre de pédalier (2) dans les deux sens de rotation de l'arbre de pédalier (2).

2. Dispositif d'entraînement selon la revendication 1, **caractérisé en ce qu'**un dispositif pour l'actionnement d'un frein à rétropédalage est agencé entre l'arbre de pédalier (2) et l'arbre creux (3), lequel se déplace librement lors d'un couplage de l'arbre de pédalier (2) avec l'arbre creux (3) par le premier couplage (61) monté en fonction du sens de rotation et couple, dans le sens de rotation placé en regard, l'arbre de pédalier (2) avec l'arbre creux (3).

3. Dispositif d'entraînement selon la revendication 1 ou 2, **caractérisé en ce que** le moteur électrique (4) peut être commandé par une électronique de commande (9) qui est reliée à des capteurs (91) pour la détection de la vitesse de rotation, du sens de rotation et du couple de l'arbre de pédalier (2) et désactive le moteur électrique (4) pour un sens de rotation opposé et/ou un couple dirigé en sens inverse au sens de déplacement vers l'avant de la bicyclette électrique de l'arbre de pédalier (2).

4. Dispositif d'entraînement selon la revendication 2, **caractérisé en ce que** le dispositif pour l'actionnement d'un frein de rétropédalage se compose d'une roue libre à rouleau de serrage avec une cage de roue libre (65) reliée de manière solidaire en rotation à l'arbre de pédalier (2), un boîtier de commutation (64) avec des rouleaux de serrage (641) agencés dans des rainures et un élément de commutation (66) agencé librement mobile coaxialement sur l'arbre de pédalier (2) et relié de manière élastique en rotation au boîtier de commutation (64) dans le sens périphérique d'une roue libre d'actionnement (63) reliée par sa surface extérieure de manière solidaire en rotation au boîtier (7).

5. Dispositif d'entraînement selon la revendication 4, **caractérisé en ce que** l'élément de commutation (66) est relié à une extrémité et le boîtier de commutation (64) est relié à l'autre extrémité d'un ressort rotatif ou hélicoïdal cylindrique (12) enfilé sur l'arbre de pédalier (2).

6. Dispositif d'entraînement selon au moins l'une quelconque des revendications précédentes, **caractérisé en ce que** l'arbre moteur (40) du moteur électrique (4) est relié par un engrenage (5) se composant de préférence d'un engrenage réducteur à plusieurs étages de différents types d'engrenage et le second couplage monté selon le sens de rotation (62) est relié à l'arbre creux (3).

7. Dispositif d'entraînement selon la revendication 6, **caractérisé en ce que** l'engrenage réducteur à plusieurs étages est réalisé comme un engrenage droit à deux étages avec un pignon relié à l'arbre moteur (40), une roue droite s'engrenant au pignon de grand diamètre d'une double roue dentée (51) et une roue droite de sortie (52) s'engrenant avec une roue droite de petit diamètre de la double roue dentée (51), qui est reliée coaxialement à l'arbre creux (3).

8. Dispositif d'entraînement selon au moins l'une quelconque des revendications précédentes, **caractérisé en ce que** l'électronique de commande (9) commandant le moteur électrique (4) est alimentée en signal de sortie d'un capteur détectant la vitesse de la bicyclette électrique.

9. Dispositif d'entraînement selon au moins l'une quelconque des revendications précédentes, **caractérisé en ce que** les couples introduits par les pédaliers (23, 24) sont détectés séparément et sont transmis à l'électronique de commande (9) qui fait la somme des couples introduits par les pédaliers (23, 24).

10. Dispositif d'entraînement selon au moins l'une quelconque des revendications 1 à 8, **caractérisé en ce que** l'angle de rotation de l'arbre creux (3) est mesuré entre le premier couplage (61) monté selon le sens de rotation et la roue à chaîne (11) pour la détection des couples introduits par les pédaliers (23, 24).

11. Dispositif d'entraînement selon au moins l'une quelconque des revendications 1 à 8, **caractérisé en ce que** l'angle de rotation de l'arbre creux (3) est détecté entre le premier couplage (61) monté selon le sens de rotation et le second couplage (62) monté selon le sens de rotation pour la détection des couples introduits par les pédaliers (23, 24) pour l'introduction supplémentaire d'un couple transmis par le moteur électrique (4).

12. Dispositif d'entraînement selon au moins l'une quelconque des revendications précédentes, **caractérisé en ce que** l'électronique de commande (9) régule ultérieurement, pour un arbre de pédalier (2) séparé de l'arbre creux (3) par le premier couplage (61) monté selon le sens de rotation, la vitesse de rotation du moteur électrique (4) jusqu'à un couple réglable et désactive le moteur électrique (4) en cas de dépassement d'une vitesse prescrite de la bicyclette électrique sans introduction d'un couple par l'arbre de pédalier (2).

13. Dispositif d'entraînement selon la revendication 12, **caractérisé en ce que** le degré de la répartition de puissance entre le couple introduit par l'arbre de pédalier (2) et le couple transmis par le moteur électrique (4) est réglable par le biais d'une partie de commande de la bicyclette électrique.

14. Dispositif d'entraînement selon au moins l'une quelconque des revendications précédentes, **caractérisé en ce que** le premier et second couplage (61, 62) montés selon le sens de rotation se composent d'une roue libre à corps de serrage avec un anneau intérieur et extérieur et de corps de serrage agencés entre l'anneau intérieur et extérieur, l'anneau intérieur ou extérieur présentant des rampes de serrage dans le sens de rotation couplant l'anneau intérieur à l'anneau intérieur de l'anneau intérieur ou extérieur.

15. Dispositif d'entraînement selon au moins l'une quelconque des revendications précédentes, **caractérisé en ce que** la bicyclette électrique se compose d'un E-bike ou d'un Pedelec et **en ce que** l'électronique de commande (9) commande l'entraînement électromoteur sans rétroaction sur l'arbre de pédalier (2).
